# EUROPÄISCHE PATENTSCHRIFT

(11) **EP 2 566 638 B1**
(45) Veröffentlichungstag und Bekanntmachung des Hinweises auf die Patenterteilung: **02.09.2015**
(21) Anmeldenummer: 11713243.1
(22) Anmeldetag: 04.04.2011
(51) Int. Cl.: B22F 1/02, C22C 29/08, B22F 1/00, B23K 35/30, B32B 7/02, C22C 9/00, C22C 19/05, B23K 35/02, B23K 35/26, B23K 35/32, B23K 35/36, C01B 31/34, C04B 35/634, C09D 7/12, C23C 24/00, B22F 3/22, B22F 5/00, C04B 35/56, C04B 35/628

(54) **DISPERSIONEN, DIE MIT WOLFRAMCARBID UMHÜLLTE WOLFRAMSCHMELZCARBID-PARTIKEL ENTHALTEN, SOWIE VERFAHREN ZUR DEREN HERSTELLUNG UND DEREN VERWENDUNG**
DISPERSIONS COMPRISNG CAST TUNGSTEN CARBIDE PARTICLES COATED WITH TUNGSTEN CARBIDE, METHOD FOR PRODUCING SAME, AND USE THEREOF
DISPERSIONS COMPRENNANT DES PARTICULES DE DE CARBURE DE TUNGSTÈNE MOULÈS REVETUS DE CARBURE DE TUNGSTÈNE AINSI QUE LEUR PROCÉDÉ DE PRODUCTION ET LEUR UTILISATION

(30) Priorität: 08.04.2010 DE 102010014267
(43) Veröffentlichungstag der Anmeldung: 13.03.2013
(73) Patentinhaber: H.C. Starck GmbH, 38642 Goslar (DE)
(72) Erfinder: GERK, Christian, 38729 Ostlutter (DE); WAAG, Ulf, 79713 Bad Saeckingen (DE)
(86) Internationale Anmeldenummer: PCT/EP2011/055170
(87) Internationale Veröffentlichungsnummer: WO 2011/124542

(56) Entgegenhaltungen:
- EP-A1- 2 105 256
- WO-A1-2004/085690
- WO-A1-2008/031121
- WO-A1-2010/040498
- CN-C- 100 400 218
- GB-A- 2 352 727
- US-A1- 2009 263 646
- US-B1- 6 649 682

## Beschreibung

Die Erfindung betrifft Dispersionen, wobei die Dispersionen Hartstoffpartikel und mindestens einen organischen Binder und/oder mindestens einen Plastifizierer enthalten, wobei die Hartstoffpartikel einen inneren Kern aus Wolframschmelzcarbid und eine äußere Hülle aus Wolframcarbid aufweisen.

Wolframschmelzkarbid (WSC) ist aufgrund seiner hohen Härte und Zähigkeit eine besonders vorteilhafte Verbindung für den Verschleißschutz. Der Einsatz von WSC in Dispersionen zu Beschichtungszwecken und zur Herstellung von Bohrkronen ist jedoch begrenzt durch die notwendige Wärmebehandlung. Bei der Wärmebehandlung wird das WSC einem flüssigen Metallbad ausgesetzt wobei sich Teile des WSC im Metallbad auflösen, was sich später nachteilig auf die Eigenschaften des behandelten Bauteils auswirkt. Die beim Herstellungsprozess angewendete Temperatur ist eine Funktion des eingesetzten Bindermetalls. Die Auflösungsgeschwindigkeit des WSC hängt wiederum von der chemischen Natur des verwendeten Bindermetalls selber sowie der angewendeten Temperatur ab. Die Aggressivität üblicher Bindermetalle gegenüber WSC nimmt ab in der Reihenfolge Fe > Ni > Cu. Ein Hartstoff mit einer Hülle aus Wolframcarbid und einem Kern aus Wolframschmelzcarbid vereint die hohe Härte und Zähigkeit des Schmelzkarbides im Inneren des Partikels mit der chemischen Beständigkeit der WC-Hülle in einer metallischen Matrix bei hoher Temperatur. Dieser besondere Hartstoff wird im Folgenden als macroline WSC bezeichnet.

Eine besonders vorteilhafte Darreichungsform von Hartstoffen ist eine Dispersion in einem organischen Binder. Eine Dispersion kann einfach und kostengünstig hergestellt und z.B. auf eine Oberfläche aufgetragen werden. Durch gezielte Einstellung der Viskosität, durch Zusatz weiterer Hartstoffe oder Metallpulver oder weitere mechanische Veredelungsschritte wie z.B. Kneten oder Kalandrieren können Dispersionen für bestimmte Anwendungen hergestellt werden. Die Einstellung der Viskosität beeinflusst jedoch die Verarbeitungseigenschaften der Dispersionen. Ein besonders vorteilhafter Bereich zur Verarbeitung von Hartstoffdispersionen liegt im Viskositätsbereich von Farben und Pasten bis hin zu selbsttragenden aber flexiblen Bauteilen wie z.B. Folien.

Einsatzbereiche der Dispersionen finden sich vor Allem im Bereich der Oberflächenbeschichtung aber auch bei der Herstellung von Bohrkronen. Dabei wird eine Dispersion vorteilhaft durch Lötvorgänge oder Infiltration mit dem beanspruchten Bauteil verbunden. Das zur metallurgischen Verbindung notwendige Lotmaterial wird dabei häufig ebenfalls als Dispersion, z.B. als tape, zur Verfügung gestellt. Die Hartstoffdispersion sowie die Lotdispersion können auch als Multilayer vorliegen. Alternativ kann der Lotwerkstoff aber auch vom Hartstoff unabhängig zugeführt werden, wie z.B. bei der Infiltration einer Bohrkrone.

Aus DE10354543 B3 ist die Herstellung eines Wolframcarbidpulvers (cWSC), wobei die Pulverpartikel einen Kern aus Wolframschmelzcarbid (WSC) und eine Hülle aus Wolframmonocarbid aufweisen, bekannt. Die Herstellung von cWSC erfolgt durch Erhitzen eines Wolframschmelzcarbidpulvers in Gegenwart einer Kohlenstoffquelle auf eine Temperatur von 1300-2000°C. Das cWSC Pulver kann eine gebrochen scharfkantige oder sphärische Morphologie aufweisen. Der große Vorteil des cWSC liegt in der chemischen Beständigkeit gegenüber flüssigen Metallen, wie es z.B. beim Einlöten und Aufschweißen von Beschichtungen oder beim Infiltrieren von Bohrkronen von großer Bedeutung ist. Die Stabilisierung des WSC durch die WC-Hülle gegenüber den Bindemetallen, meistens Nickel, Kupfer, Cobalt oder Eisenlegierungen mit verschiedenen Legierungselementen wie z.B. Mn, P, B oder Si führt zur weitgehenden Erhaltung des eingesetzten Hartstoffgehaltes und damit zur Vermeidung der Ausscheidung spröder Carbide beim Erstarrungsvorgang und zur Stabilisierung der Viskosität des Metallbades. DE10354543 B3 beansprucht u.A. den Einsatz des WSC zur Oberflächenbeschichtung mit den üblichen Verfahren, die von Pulvern oder Pulvergemischen ausgehen wie z.B. Schweißen oder Spritzen.

Aus DE 2115358 und US 3743556 ist ein Verfahren zur Herstellung von Schichten aus einem in einem Metall dispergierten feinen Füllstoff bekannt. Die Herstellung von tapes, die organische Materialien, Metallpulver und Wolframcarbid enthalten, zählt gemäß US 3743556 seit den siebziger Jahren zum Stand der Technik. Darin wird auch der Einsatz von Diamanten als Füllstoff erwähnt. Den o.g. Schriften ist jedoch nicht zu entnehmen, dass die Diamanten an definierten Stellen im tape platziert werden können.

US 5164247 beschreibt eine Methode zur Verbesserung der Verschleißbeständigkeit von Schichten, die mit Hilfe gefüllter tapes hergestellt wurden. Hierbei wird eine Verdichtung des tapes mittels Walztechnik vorgeschlagen.

US 6649682 B1 beschreibt die Verwendung von Hartstoffen, die wie eine Farbe aufgetragen werden zum Verschleißschutz, insbesondere zur Herstellung besonders dünner Schichten. Es wird ausdrücklich betont, dass sich die eingesetzten Hartstoffe im Metallbad nicht auflösen dürfen.

In US 6309761 B1 wird ein generelles Problem der Temperaturempfindlichkeit der eingesetzten Werkstoffe bei der Beschichtung durch Lötprozesse, wie z.B. bei der Aufbringung von tapes, Pasten oder Farben auf Stahlkörper bevorzugt eingesetzt, angesprochen. Durch den Wärmeeintrag z.B. beim Lötvorgang wird nicht nur der Hartstoff sondern auch der Grundkörper negativ beeinflusst. Das Problem wird umgangen indem eine sogenannte "preform" eingesetzt wird. Das heißt, die Beschichtung wird auf einem thermisch unempfindlichen metallischen Grundkörper vorgenommen und dann zusammen mit diesem metallischen Grundköper auf das eigentlich zu beschichtende Bauteil aufgebracht. Diese Lösung ist eine Variante zum Schutz der Gefügestruktur des zu beschichtenden Bauteils.
WO 2004/085690 beschreibt eine Methode zur Herstellung von sphärischem Wolframschmelzcarbid (WSC) und monophasigem Wolframcarbid (WC) mit Zusatz von Dotierungselementen aus der Gruppe Ti, V, Nb und Ta.

Alle zitierten Erfindungen haben gemeinsam, dass einer der besten Werkstoffe, die es im Sektor des Verschleißschutzes gibt - das klassische Wolframschmelzcarbid - in der Praxis der Beschichtung durch Lötvorgänge keine Anwendung findet. Der Grund dafür ist die Auflösung des WSC im Metallbad beim Lötvorgang, welcher die Schutzschicht unbrauchbar macht.

US 2009/0263646 offenbart Hartstoffpartikel mit einem inneren Kern aus Wolframschmelzcarbid und einer äußeren Hülle aus Wolframcarbid, die hergestellt werden durch Carburieren von Wolframschmelzcarbid-Partikeln.

CN 100400218C offenbart eine Dispersion, enthaltend 60 bis 95% Wolframcarbid, 0 bis 30% Wolframschmelzcarbid, 0,5 bis 2% eines organischen Binders und ein Legierungspulver auf Ni-Basis.

GB 2352727 beschreibt eine Dispersion, die Wolframcarbid-Partikel, Wolframschmelzcarbid-Partikel, 0,36% organischen Binder, und Silicomangan, Nb, Stahl-Legierungen etc. enthalten können.

Aufgabe der vorliegenden Erfindung war es daher, hartstoffhaltige Systeme zur Verfügung zu stellen, in welchen der Hartstoff eine bestmögliche Kombination von Härte, Zähigkeit sowie die Beständigkeit gegenüber den Metallschmelzen aufweist. Weiterhin, sollten die hartstoffhaltigen Systeme für den Einsatz in Farben, Pasten, bis hin zu selbsttragenden aber flexiblen Bauteilen wie z.B. Folien geeignet sein. Eine weitere Aufgabe der Erfindung war auch hartstoffhaltige Systeme bereit zu stellen, mit denen die Anwendungsbereiche wie Oberflächenbeschichtung und insbesondere die Herstellung von Bohrkronen erschlossen werden können.

Die Aufgabe der Erfindung wird gelöst durch Dispersionen gemäß Anspruch 1.

Die Dispersionen enthalten Hartstoffpartikel und mindestens einen organischen Binder und/oder mindestens einen Plastifizierter, wobei die Hartstoffpartikel einen inneren Kern aus Wolframschmelzcarbid und/oder einer Legierung bestehend aus Wolframschmelzcarbid und mindestens einem weiteren Carbid der Elemente ausgewählt aus der Gruppe 4A, 5A und 6A des Periodensystems der Elemente und eine äußere Hülle aus einer Legierung bestehend aus Wolframcarbid und mindestens einem weiteren Carbid der Elemente ausgewählt aus der Gruppe 4A, 5A und 6A des Periodensystems der Elemente aufweisen.

Besteht der innere Kern oder die äußere Hülle der Hartstoffpartikel aus einer Legierung aus Wolframschmelzcarbid und einem weiteren Carbid der Elemente ausgewählt aus der Gruppe 4A, 5A und 6A des Periodensystems der Elements, d.h. mindestens einem Carbid der Elemente Ti, Zr, Hf, V, Nb, Ta, Cr, Mo, so beträgt der Gesamtgehalt an weiteren Carbiden bis zu 10 Gew. %.

In einer vorteilhaften Ausgestaltung der Erfindung kann auch ein Lotmaterial, insbesondere ein Hartlot oder ein Hochtemperaturlot, enthalten sein. In einer weiteren vorteilhaften Ausgestaltung können auch Gemische aus verschiedenen Hartstoffen enthalten sein, wobei einer der Hartstoffe immer ein Wolframcarbid sein sollte mit einem Kern aus Wolframschmelzcarbid.

Es hat sich gezeigt, dass sich die Hartstoffpartikel, gegebenenfalls zusammen mit Lotmaterialpulvern, in Anwesenheit einer Bindersuspension enthaltend einen organischen Binder und gegebenenfalls einen Plastifizierer zu einem stabilen Schlicker verarbeiten lassen. Die Hartstoffpartikel lassen sich gut in die Lotmaterialmatrix einbinden, da eine leichte Benetzung mit dem Lotmaterial erfolgt.

Durch das Vergießen des Schlickers z.B. zur entsprechenden Verschleißschutzfolie, Paste oder Farbe wird die Verteilung der Hartstoffpartikel in der Lotmaterialmatrix kaum beeinflusst. Dies kann auf die Verwendung eines organischen Binders zurückgeführt werden, wodurch die gute Hartstoffverteilung in der Metallmatrix während des Herstellungsprozesses der Masse stabilisiert wird. Eine nachgelagerte Trocknung der Masse bzw. eine Entbinderung der Folie bei niedrigen Temperaturen unter 400°C beeinflusst die Partikelverteilung der Masse ebenfalls nicht merklich. Die erhaltene Masse kann, wenn sie zur Folie verarbeitet wurde, weiterhin vorgesintert werden, das heißt, die Folie wird einem Sinterschritt unterworfen, bevor sie auf ein Bauteil aufgetragen wird, um in einem darauffolgenden Schritt die Verschleißschutzschicht zu erzeugen. Durch die Vorsinterung der Folie wird der Folienschwund bei der Herstellung von Verschleißschutzschichten auf dem gewünschten Bauteil reduziert. Dies schließt allerdings nicht aus, dass auch nicht vorgesinterte oder nicht entbinderte Verschleißschutzfolien direkt auf das jeweilige Bauteil aufgetragen und dann entbindert und weiter bearbeitet werden können. Die vorgesinterten Folien können darüber hinaus auch einfach auf ein Bauteil aufgeklebt bzw. unter Verwendung eines Zusatzlotes auf das Bauteil, z.B. mittels Flammlöten, aufgelötet oder aufgeschweißt werden.

In einer weiteren Ausgestaltung der Erfindung kann eine vorgesinterte oder nicht vorgesinterte Verschleißschutzfolie gemäß der Erfindung auch in eine Form eingelegt werden, die Form mit einer Pulvermischung (z.B. aus Wolframcarbid oder anderen Hartstoffen) gefüllt und anschließend komplett mit einem metallischen Binder oder einem Lot infiltriert werden. Hierdurch wird bei einer nicht vorgesinterten Verschleißschutzfolie der organische Binder ausgebrannt und die entstehende poröse Struktur aus dem Hartstoff mit dem metallischen Binder oder Lot infiltriert. Diese Vorgehensweise ist beispielsweise zur Herstellung von Bohrkronen gut geeignet. Bei der Form handelt es sich dann üblicherweise um eine Graphitform.

In einer weiteren Ausgestaltung der Erfindung kann ein zusätzlicher Füllstoff in einer Dispersion Diamant sein. Wird die Dispersion in Form einer Folie ausgestaltet, so besteht erfindungsgemäß die Möglichkeit, die Diamanten gemäß einer Vorgabezeichnung an einem bestimmten geometrisch definierten Ort in der Folie einzubringen. Durch den Löt- oder Beschichtungsprozess soll dieser Ort nicht wesentlich verändert werden, wodurch die Dispersion mit den Diamanten noch vorteilhafter zum gezielten Schutz der Oberfläche eingesetzt werden kann.
Der Gegenstand der Erfindung sind auch Verschleißschutzfolien, enthaltend aus den Dispersionen gemäß der Erfindung.
Die hier beschriebenen Verschleißschutzfolien, Pasten oder Farben eignen sich somit insbesondere für das Aufbringen auf Bauteile durch Hartlöten oder Hochtemperaturlöten, insbesondere in Vakuumöfen. Im Falle vorgesinterter Verschleißschutzfolien können diese auch aufgeklebt, aufgelötet oder aufgeschweißt werden. Auch nach den hohen Temperaturen während des Sinterns, Vorsinterns, Hartlöt- bzw. des Hochtemperaturlötprozesses zeigen die erhaltenen Verschleißschutzschichten eine nahezu isotrope Mikrostruktur in der Partikelverteilung und eine sehr geringe Porosität, wodurch ein geringer Abrieb und eine hohe Härte über die gesamte zu veredelnde Fläche des Bauteils erreicht wird. Die Porenbildung wird dabei durch die gute Benetzbarkeit der Hartstoffpartikel durch das Lotmaterial reduziert, da es an der Grenzfläche zwischen den metallumhüllten Hartstoffpartikeln und dem Lotmaterial zu einer guten Anbindung kommt.

Bei den gemäß der Erfindung verwendeten Hartstoffpartikeln (im Folgenden abgekürzt mit "macroline WSC") handelt es sich besonders um Wolframschmelzcarbidpartikel bzw. dessen Legierungen mit mindestens einem Carbid der Elemente Ti, Zr, Hf, V, Mo, Nb, Ta und Cr und mit einer Hülle aus Wolframcarbid.
Wolframschmelzcarbid (WSC) ist eine Mischung aus WC und W₂C, das insbesondere ein eutektisches Gefüge aus WC und W₂C darstellt.
Beim WSC handelt es sich um ein eutektisches Gemisch aus WC und Diwolframcarbid (W₂C), wobei das durchschnittliche Kohlenstoff-Massenverhältnis in der Regel zwischen 3,8 und 4,2 Gew.-% liegt. Dies entspricht einer Phasenverteilung von 73-80 Gew.-% W₂C und 20-27 Gew.-% WC. WSC weist ein sehr feinkörniges Kristallgefüge auf, das oftmals als Federstruktur beschrieben wird, und durch schnelles Abschrecken einer Carbidschmelze erhalten wird. Die Hülle der Partikel besteht aus Wolframmonocarbid, genannt auch Wolframcarbid WC.
Ein besonders bevorzugtes Wolframschmelzcarbid mit einer WC-Hülle ist das Macroline Wolframschmelzcarbid (MWC, der Arnperweld® Pulver Serie der Firma H.C.Starck GmbH).

Der erfindungsgemäß verwendete Hartstoff, das macroline WSC, lässt sich erhalten, indem WSC durch Aufkohlung bis zu einer gewünschten Tiefe in WC umgewandelt wird, und kann im Allgemeinen zur Herstellung von Verschleißchutzschichten und verschleißfesten Bauteilen eingesetzt werden.

Das erfindungsgemäß verwendete macroline WSC zeichnet sich insbesondere dadurch aus, dass die überragende Zähigkeit und Härte des WSC im Kern des WC/WSC-Verbundes auch dann erhalten bleibt, wenn es in üblicher Weise verarbeitet, d. h. mit einem flüssigen Matrixmaterial in Kontakt gebracht wird.

Der erfindungsgemäß verwendete Hartstoff weist vorzugsweise einen Gehalt an gebundenem Kohlenstoff von 4 bis 6 Gew.-%, insbesondere bevorzugt von 4,5 bis 5,5 Gew. % auf. Der Gehalt an freiem Kohlenstoff sollte 0,1 Gew.-% nicht überschreiten.

Ist der Gehalt an gebundenem Kohlenstoff kleiner als 4 Gew.-%, so bildet sich keine ausreichend dichte WC-Hülle aus, so dass keine Steigerung der chemischen Beständigkeit im Vergleich zu WSC zu beobachten ist. Nähert sich der Gehalt an gebundenem Kohlenstoff dem Grenzwert 6,13 Gew.-% entsprechend reinem WC, so wird der WSC-Kern so klein, dass gegenüber reinem WC keine Steigerung der Härte mehr erreicht wird.

Die vorteilhaften Eigenschaften des erfindungsgemäß verwendeten Hartstoffpulvers bleiben auch dann erhalten, wenn es einen geringen Anteil an WC-Partikeln aufweist, d. h. nicht alle Pulverpartikel aus einem Kern aus WSC und einer WC-Hülle aufgebaut sind. Solche Wolframcarbidpulver sind daher ebenfalls erfindungsgemäß. Gemäß der Erfindung kann also für die Verschleißschutzfolien auch eine Pulvermischung verwendet werden, welche aus Wotframcarbidpartikeln und Wolframschmelzcarbidpartikeln mit einer Wolframcarbidhülle besteht.

Vorzugsweise weisen jedoch mindestens 70%, insbesondere mindestens 80%, vorteilhaft mindestens 90 % der Pulverpartikel einen Kern aus WSC und eine WC-Hülle auf.

Die mittlere Partikelgröße kann in einem weiten Bereich variieren und richtet sich insbesondere nach der geplanten Verwendung und damit der Dicke der Verschleißschutzfolien gemäß der Erfindung.
Die Partikelgröße bestimmt mittels RoTap-Siebanalyse gemäß ASTM B 214 kann im Allgemeinen bis 3000 µm betragen. Vorteilhaft kann eine Partikelgrößenfraktion bestimmt mittels RoTap-Siebanalyse gemäß ASTM B 214 von 3 µm bis 1500 µm, von 5 µm bis 1000 µm, vorzugsweise von 5 µm bis 500 µm, bevorzugt von 10 µm bis 300 µm oder von 10 bis 180 µm verwendet werden.

Werden Folien oder Pasten zur Herstellung von Bohrkronen durch Infiltration in Graphitformen herangezogen so kann die Korngrößenverteilung der eingesetzten Hartstoffe natürlich an die Korngröße der sie umgebenden pulverförmigen Hartstoffe angepasst werden um das Infiltrationsverhalten über die Kapillarwirkung der Poren nicht negativ zu beeinflussen. Der übliche Korngrößenbereich liegt auch hier zwischen 10 und 250 µm.

Die Einstellung der mittleren Partikelgröße kann beispielsweise durch Wahl eines WSC-Pulvers mit bestimmter mittleren Partikelgröße als Edukt zur Herstellung des macroline WSC erfolgen. Es ist aber beispielsweise auch möglich, aus bereits hergestelltem macroline WSC bestimmte Kornfraktionen zu mischen oder abzutrennen, beispielsweise durch Sieben oder Sichten.

Im erfindungsgemäß verwendeten Hartstoffpulver ist der WSC-Kern von einer dichten Hülle aus Wolframmonocarbid umgeben. Die Dicke der Hülle, bestimmt mittels Lichtmikroskopie am geätzten Material, beträgt vorzugsweise das 0,05 bis 0, 4-fache der mittleren Partikelgröße bestimmt mittels RoTap-Siebanalyse gemäß ASTM B 214, insbesondere bevorzugt das 0,05 bis 0,15-fache.
Macroline WSC weist eine ausgezeichnete Härte auf. Vorzugsweise beträgt die Härte nach Vickers > 2000 HV_{0,1}, insbesondere bevorzugt von > 2500 HV_{0,1}.

Die Einstellung der Morphologie der Partikel kann beispielsweise durch Einsatz eines geeigneten WSC-Pulvers erfolgen.

Das erfindungsgemäß verwendete Hartstoffpulver kann demnach verschiedene Morphologien aufweisen, beispielsweise scharfkantig gebrochen oder sphärisch. Die sphärische Morphologie bietet prinzipiell Vorteile bezüglich der Verschleißfestigkeit, ist allerdings in der Herstellung aufwändiger als Pulver mit unregelmäßiger Morphologie. Es können auch Mischungen von Pulvern unterschiedlicher Morphologie eingesetzt werden.

Das erfindungsgemäß verwendete Hartstoffpulver kann erhalten werden durch ein Verfahren zur Herstellung des erfindungsgemäßen Wolframcarbids (macroline WSC), wobei Wolframschmelzcarbidpulver in Gegenwart einer Kohlenstoffquelle auf eine Temperatur von 1300°C bis 2000°C, vorzugsweise von 1400°C bis 1700°C erhitzt wird.

Das Verfahren kann in Gegenwart von Inertgas, in Gegenwart von Reaktivgas oder im Vakuum durchgeführt werden. Vorzugsweise wird in Gegenwart von Wasserstoff gearbeitet.

Als Reaktivgas eignet sich insbesondere eine gasförmige Kohlenstoffquelle, beispielsweise Kohlenmonoxid, ein CO-/CO2-Gemisch, ein Kohlenwasserstoff oder ein Kohlenwasserstoffgemisch, wie etwa Erdgas.

Als Kohlenstoffquelle kommen gasförmige und feste Kohlenstoffquellen in Betracht. Als feste Kohlenstoffquelle können beispielsweise Russ oder Graphit eingesetzt werden. Es ist natürlich auch möglich, Mischungen verschiedener gasförmiger und/oder fester Kohlenstoffquellen einzusetzen.

Durch die Temperaturbehandlung von WSC in Gegenwart der Kohlenstoffquelle kommt es an der Oberfläche zu einer Umwandlung von WSC zu WC. Es bildet sich also um das WSC eine dichte WC-Schicht aus.

Temperatur, Umsetzungszeit und die Menge an zugesetzter Kohlenstoffquelle werden dabei so gewählt, dass sich die Hülle an WC in gewünschter Dicke ausbildet. Es ist dabei darauf zu achten, dass im Inneren der Partikel WSC erhalten bleibt. Die einzuhaltenden Bedingungen werden im Wesentlichen durch die Partikelgröße und Partikelform des eingesetzten WSC-Pulvers bestimmt und lassen sich anhand einfacher Versuchsreihen bestimmen. Wird der Kohlenstoffgehalt zu hoch eingestellt, steigert dies die zur Umsetzung benötigte Zeit und Temperatur und verringert den Anteil des federförmigen Gefüges, d. h. den Anteil an WSC unnötig. Es hat sich als vorteilhaft erwiesen, die Kohlenstoffquelle in einer solchen Menge zuzugeben, dass der Gesamtkohlenstoffgehalt in der Reaktionsmischung, d. h. die Summe der Kohlenstoffgehalte von WSC und Kohlenstoffquelle, 4 bis 6 Gew.-%, vorzugsweise 4,3 bis 5,5 Gew.-% beträgt.
Bei der Umsetzung von WSC mit Pulverpartikeln stark unterschiedlicher Korngrößen können feinere Kornfraktionen im Verhältnis zu ihrem Korndurchmessers stärker karburiert werden als grobe Körner. Dies trifft vor allem für Pulver mit einem hohem Feinanteil < 45 µm zu und kann durch vorherige Abtrennung des Feinanteils und getrennte Umsetzung der verschiedenen Pulverfraktionen verhindert werden.
Die Umsetzungszeiten betragen meist 1 bis 10, vorzugsweise 1,5 bis 7 Stunden.

Zur Herstellung des gemäß der Erfindung für die Dispersionen verwendeten Hartstoffpulvers kann also beispielsweise von gebrochenem oder sphärischem WSC ausgegangen werden, das auf die gewünschte Korngröße abgesiebt wird. Das Material wird anschließend mit einer Kohlenstoffquelle, z. B. Russ, in der gewünschen Menge intensiv vermengt, einer Wärmebehandlung unterzogen und dabei am Rand aufgekohlt. Zur Wärmebehandlung sind konventionelle Durchschuböfen oder vergleichbare Aggregate geeignet, die beispielsweise im Temperaturbereich zwischen 1550 °C und 1900 °C unter Wasserstoffatmosphäre oder Schutzgas betrieben werden können. Das Gemisch aus WSC und Russ wird beispielsweise in Graphitschiffchen eingefüllt. Bei der Umsetzung reagiert der Kohlenstoff mit dem im WSC vorhandenen W₂C und wandelt dieses in WC um, welches von dem bereits vorhandenen WC nicht mehr zu unterscheiden ist. Der dadurch entstehende WC-Saum bildet eine natürliche Diffusionsbarriere für den Kohlenstoff, so dass die gewünschte Aufkohlungstiefe über die Parameter Zeit und Temperatur gesteuert werden kann.

In einer weiteren Ausführungsform können die beanspruchten Dispersionen neben dem organischen Binder auch Plastifizierer enthalten. Der Anteil der organischen Binder und Plastifizierer beträgt 2 Gew.-% bis 20 Gew.-% bezogen auf das Gesamtgewicht. Dabei werden organischer Binder und Plastifizierer bevorzugt in einem Gewichtsverhältnis zwischen 100 : 0 und 50 : 50 eingesetzt. Sofern ein organischer Binder in der Verschleißschutzfolie enthalten ist, liegt dieser besonders bevorzugt mit einem Gewichtsanteil zwischen 0,5 Gew.-% und 15 Gew.-%,
insbesondere zwischen 2 Gew.-% und 10 Gew.-% vor, der Plastifizierer liegt besonders bevorzugt mit einem Gewichtsanteil zwischen 0,1 Gew.-% und 10 Gew.-%, insbesondere zwischen 0,5 Gew.-% und 5 Gew.-%, bezogen auf das Gesamtgewicht der Folie vor.

Bevorzugte organische Binder und Plastifizierer sind solche, die sich bei Temperaturen unter 400°C, bevorzugt unter 350°C zersetzen. Geeignete organische Binder sind z.B. Polymere mit einer niedrigen Ceiling-Temperatur von vorteilhaft 200°C oder weniger, wie z.B. halogenierte Polyolefine, insbesondere Teflon, Polyacetale, Polyacrylate oder Polymethacrylate oder dessen Copolymere, Polyalkylenoxide, Polyvinylalkohole oder dessen Derivate, Polyvinylacetate, Polyoxymethylen oder Polyvinylbutyrale. Besonders bevorzugt sind organische Binder aus der Gruppe der Polyalkylencarbonate, insbesondere Polypropylencarbonat. Der organische Binder dient insbesondere dazu beim Trocknen die einzelnen Feststoffpartikel miteinander zu verbinden. Der Binder sollte im Lösungsmittel gut löslich sein und sich mit weiteren Additiven, wie z.B. Dispergiermitteln vertragen. Vorteilhaft wird durch die Zugabe des Binders die Viskosität des Schlickers kaum erhöht und besitzt stabilisierende Wirkung auf die Suspension erzielt. Der organische Binder sollte bevorzugt bei niedrigen Temperaturen unter 400 °C rückstandsfrei ausbrennen. Vorteilhaft sind z.B. Polyoxymethylen, Polyacrylate oder Polymethacrylate, welche depolymerisieren und das entstehende Monomer entweder verbrennt oder als verdampft.
Zusätzlich sorgt der Binder für eine verbesserte Haltbarkeit und eine verbesserte Handhabbarkeit der Grünmasse, insbesondere dafür, dass die Bildung von Rissen zum Beispiel bei der Trocknung reduziert wird. Dies gilt insbesondere fuer den Viskositätsbereich der Folien.

Als Plastifizierer (Weichmacher) eignen sich z.B. Phthalate, wie z.B. Benzylphthalat, Leime, Wachse, Gelatine, Dextrine, Gummiarabikum, Öle, wie z.B. Paraffinöl oder Polymere, wie z.B. Polyalkylene, insbesondere Polyethlen. Bevorzugte Plastifizierer sind allerdings Alkylencarbonate, insbesondere Propylencarbonat. Der Plastifizierer soll insbesondere die Herabsetzung der Glastemperatur des polymeren Binders und eine höhere Flexibilität der Grünfolie bewirken. Der Plastifizierer dringt in die Netzstruktur des Binders ein und setzt damit die Viskosität des Schlickers herab. Durch Einstellung eines geeigneten Binder/Plastifiziererverhältnisses und durch Kombination verschiedener Binder und Plastifizierer lassen sich z.B. die Reißfestigkeit und Dehnbarkeit der Grünmassen beeinflussen. Auch die verwendeten Plastifizierer brennen bevorzugt bei niedrigen Temperaturen unter 400°C vollständig aus.

Als Lotmaterial im Sinne der vorliegenden Erfindung sind Hartlote bzw. Hochtemperaturlote zu verstehen. Als Lotmaterialien kommen insbesondere Lotpulver aus der Gruppe der Nickel-, Titan-, Kobalt-, Kupfer-, Zinn- oder Silberlote in Betracht. Geeignete Lote sind z.B. Hartlote, wie Kupfer/Zinn-Lote, Silber/Cadmium/Kupfer-Lote, Silber/Phosphor-Lote. Besonders bevorzugt werden Hochtemperaturlote, wie z.B. Lote auf Nickel- oder Kobalt-Basis, wie Kobalt/Chrom-, Nickel/Chrom-haltige Lote oder Nickel/Kobalt-haltige Lote eingesetzt.

In einer Ausführungsform werden die Hartstoffpartikel in Kombination mit nickelhaltigen Lotmaterialien eingesetzt. Durch die Verwendung des mit Wolframcarbid umhüllten Wolframschmelzcarbids als Hartstoffpartikel, kann die Auflösung des Hartstoffes im Lotmaterial vermindert werden.

Die hier beschriebenen Dispersionen enthalten in der Regel, bezogen auf dessen Gesamtgewicht der Masse, 5 Gew.-% bis 95 Gew.-%, bevorzugt zwischen 10 Gew.-% und 90 Gew.-% an Hartstoffpartikeln und optional 5 Gew.-% bis 95 Gew.-%, bevorzugt 10 Gew.-% bis 50 Gew.-%, an Lotmaterialpartikeln. Besonders bevorzugt enthalten die Dispersionen zwischen 60 Gew.-% und 80 Gew.-% an Hartstoffpartikeln und optional zwischen 20 Gew.-% und 40 Gew.-% an Lotmaterial. Durch die unterschiedliche Zusammensetzungen der Dispersionen wird erreicht, dass die gewünschten Viskositäten in den Zwischen- bzw. Endprodukten wie z.B. Verschleißschutzfolien und Verbundmaterialien erreicht werden.

Das Mischungsverhältnis des Hartstoffs und der Lotmaterialien kann dabei in Abhängigkeit von der jeweiligen Verschleißschutzanwendung variiert werden. Die verwendeten Lotmaterialien können, anhand der gewünschten Lottemperatur und anhand des Materials des zu beschichtenden Bauteils ausgewählt werden. Bevorzugt sollten die Lotmaterialien eine Solidustemperatur oberhalb der Zersetzungstemperatur von eingesetzten organischen Additiven besitzen. Die Dispersionen enthalten außerdem ad 100 Gew.-% organischen Binder, welcher optional Plastifizierer enthalten kann.

Die beschriebenen Dispersionen können, insofern sie als Folien verarbeitet wurden, auch mit weiteren hartstoffhaltigen und/oder lotmaterialhaltigen Lagen laminiert werden. Beispielsweise können zwei oder mehr gemäße Folien gemäß der Erfindung, die durch einen unterschiedlichen Gehalt an Hartstoffpartikeln bzw. an Lotmaterial gekennzeichnet sind, zu einer Verbundfolie oder Verbundmaterial laminiert werden.

Folglich sind ein weiterer Gegenstand der vorliegenden Erfindung Verbundmaterialien enthaltend mindestens eine der beschriebenen Dispersionen in Form einer Verschleißschutzfolie, wobei die einzelnen Schichten des Verbundes unterschiedliche Anteile an Hartstoffpartikeln und/oder Lotmaterialpartikeln enthalten. Solche Verbundmaterialien besitzen bevorzugt eine Schicht mit einem Anteil zwischen 40 Gew.-% und 95 Gew.-%, besonders bevorzugt zwischen 60 Gew.-% und 90 Gew.-%, an Hartstoffpartikeln und optional 5 Gew.-% bis 60 Gew.-% an Lotmaterial. Weiterhin besitzen die Verbundmaterialien noch mindestens eine weitere Schicht, die vor allem Lotmaterial, bevorzugt mit einem Anteil zwischen 40 Gew.-% und 100 Gew.-%, besonders bevorzugt zwischen 60 Gew.-% und 90 Gew.-%, enthält. Auch diese Schicht kann Hartstoffpartikel, insbesondere mit einem Gewichtsanteil zwischen 10% und 40% enthalten. Auch solche Verbundmaterialien können auf dem Bauteil aufgesintert und/oder vorgesintert werden. Gesinterte Verbundmaterialen können ebenfalls einfach auf das Bauteil aufgeklebt, aufgelötet oder aufgeschweißt werden.

Die erfindungsgemäßen Dispersionen können insbesondere auch als ebene Folien ausgeführt werden oder auch dreidimensional geformte Folien sein. Die Schichtdicke der Folien liegt dabei zwischen 10 µm und 3000 µm, insbesondere zwischen 50 µm und 2500 µm, bevorzugt zwischen 200 µm und 2000 µm.

Ein weiterer Gegenstand der vorliegenden Erfindung ist ein Verfahren zur Herstellung der Dispersionen, insbesondere ein Foliengießverfahren zur Herstellung der Verschleißschutzfolien, welches einfach, großtechnisch durchführbar und dementsprechend kostengünstig ist. Dazu wird zuerst eine Bindersuspension enthaltend mindestens ein Lösungsmittel und einen organischen Binder hergestellt.

Als Lösungsmittel kommen insbesondere organische Lösungsmittel in Betracht. Allerdings kann auch der Zusatz von Wasser in bestimmten Fällen zweckmäßig sein. Bevorzugte Lösungsmittel sind beispielsweise Ester, Ether, Alkohole oder Ketone, insbesondere Methanol, Ethanol, Propanol, Butanol, Diethylether, Butylmethylether, Essigsäuremethylester, Essigsäureethylester, Aceton, Methylethylketon (MEK) oder deren Mischungen. Besonders bevorzugte Lösungsmittel sind Ketone, insbesondere aus der Gruppe der Alkylketone. Als organische Binder kommen bevorzugt die weiter oben genannten Verbindungen, insbesondere Polyalkylencarbonate, zum Einsatz. Weiterhin kann der Bindersuspension auch direkt ein Plastifizierer zugegeben werden. Das erhaltene Gemisch wird in einem Mischaggregat, wie z.B. einer Kugelmühle, durchmischt und homogenisiert.

Die so hergestellte Bindersuspension wird nun mit den Hartstoffpartikeln und gegebenenfalls dem Lotmaterial versetzt und zu einem Schlicker verarbeitet. Dies kann z.B. in einem Taumelmischer oder in einer Kugelmühle erfolgen, wobei die Kugelmühle mit Mahlkörpern befüllt wird, die bevorzugt eine höhere Dichte als die zu verarbeitenden Hartstoffpartikel haben. Die Bindersuspension wird bevorzugt in der Kugelmühle vorgelegt, kann aber auch nachträglich zugegeben werden. Weiterhin werden das Hartstoffpulver und das Lotmaterialpulver in die Kugelmühle gefüllt, wobei die erhaltene Mischung solange gemahlen und gerührt wird, bis ein stabiler Schlicker entsteht. Bei Verwendung einer Kugelmühle dauert eine ausreichende Durchmischung und Homogenisierung des Schlickers im Allgemeinen zwischen 4 Stunden und 48 Stunden. Der Schlicker kann dann im Anschluss bei Unterdruck entgast werden. Die Lagerung, Entgasung bzw. anderweitige Verarbeitungsschritte werden bevorzugt unter ständigem Rühren vorgenommen, um eine Sedimentation der Feststoffbestandteile des Schlickers zu verhindern.

In alternativen Ausführungsformen können natürlich auch die Hartstoff- und/oder Lotmaterialpartikel vorlegiert und die Bindersuspension zugesetzt werden. Auch eine kontinuierliche oder portionsweise Zugabe der Bindersuspension während der Schlickerherstellung ist denkbar.

Der erhaltene Schlicker kann dann je nach eingestellter Viskosität zu einer Farbe oder einer Paste verarbeitet oder zu einer Folie mit herkömmlichen Foliengießverfahren vergossen werden. Dis Viskosität der hergestellten Dispersion nimmt ab in der Reihenfolge: Folie > Paste > Farbe.

Zur Herstellung des Schlickers werden bevorzugt 5 Gew.-% bis 60 Gew.-%, bevorzugt 10 Gew.-% bis 30 Gew.-%, der Bindersuspension bezogen auf das Gesamtgewicht des Schlickers (inklusive Lösungsmittel) eingesetzt. Die Bindersuspension umfasst zumindest 1 Gew.-% bis 60 Gew.-%, besonders bevorzugt zwischen 5 Gew.-% und 40 Gew.-%, an organischem Binder bezogen auf das Gesamtgewicht der Bindersuspension und 0 Gew.-% bis 15 Gew.-%, besonders bevorzugt zwischen 2 Gew.-% und 10.Gew.-%, an Plastifizierer bezogen auf das Gesamtgewicht der Bindersuspension (inklusive Lösungsmittel). Die Bindersuspension enthält eine ausreichende Menge an Lösungsmittel, um zumindest eine Suspension der einzelnen Bestandteile der Bindersuspension zu gewährleisten. Der Verwendung größerer Mengen Lösungsmittel, die für die Suspension der Hartstoffpartikel und der Lotmaterialpartikel benötigt werden, steht dem nicht entgegen. Allerdings kann während des gesamten Herstellungsprozesses des Schlickers bei Bedarf auch weiter Bindersuspension bzw. Lösungsmittel hinzugegeben werden. Bevorzugt wird die Menge des Lösungsmittels so dosiert, dass Schlicker mit einem hohen Feststoffgehalt entstehen.

Dem Schlicker bzw. der Bindersuspension können weitere nützliche Additive, insbesondere Dispergiermittel, Entschäumer oder Schutzkolloide, wie z.B. Polyester/Polyamin-Kondensationspolymere, Alkylphosphatverbindungen, Polyvinylalkohole, Dextrine oder Celluloseether sein.

Beim Einsatz der Dispersion für das Foliengießen durch ein Schlickergussverfahren können übliche Foliengießbänke verwendet werden. Dabei wird der Schlicker in einen Vorratsbehälter gefüllt unter dem ein Kunststoffträger verläuft, der kontinuierlich mit geregelter Geschwindigkeit unter dem Behälter durchgeführt wird. Der Schlicker wird dabei aus dem Vorratsbehälter auf die Kunststofffolie gegossen und mit einem Gießrakel auf eine bestimmte Dicke abgestrichen. Dadurch wird eine glatte und ebene Folie erzeugt, die im Anschluss in der Regel bei variablen Temperaturen getrocknet, gegebenenfalls von der Kunststofffolie abgezogen und aufgerollt oder weiterbearbeitet bzw. konfektioniert wird. Das beschriebene Verfahren zeichnet sich durch eine hohe Produktionsgeschwindigkeit und damit durch günstige Herstellungskosten aus, wobei die Qualität der hergestellten Folien eine gute Konstanz aufweist. Weiterhin können einfach unterschiedliche Foliendicken, insbesondere im Bereich zwischen 10 µm und 3000 µm und Folienbreiten eingestellt werden. Die maximale Folienbreite wird dabei von der eingesetzten Foliengießanlage vorgegeben. Aufgrund des ausgeprägten pseudoplastischen Verhaltens des Schlickers können allerdings Folienbreiten von bis zu 400 mm problemlos hergestellt werden. Die Foliendicke und -breite kann dabei durch folgende Parameter eingestellt werden: Schneidenhöhe des Rakels, Füllhöhe und damit Gießdruck des Schlickers in der Gießkammer, Ziehgeschwindigkeit der Kunststoffunterlage, Gießschuhbreite und Viskosität des Schlickers. Die Foliendickenschwankung in der Breite und Länge sind bei diesem Verfahren üblicherweise kleiner 10 %. Werden als Gussunterlage strukturierte Kunststoffträger eingesetzt, können auch einfache Strukturen in die Verschleißschutzfolie eingebracht werden.

Im Gegensatz zu anderen Verfahren der Folienherstelllung können beim Foliengießen besonders leicht 3 dimensionale Strukturen in die Folien mit eingegossen werden. Eine vorteilhafte Ausführungsform ist das Umgiessen von Diamantplatten, die vorher auf der Kunsttoffunterlage fixiert werden. Somit kann man neben der willkürlichen Verteilung von Diamanten in der Hartstoffdispersion auch eine gezielte 3 dimensionale Anordnung von Diamantplatten vorsehen.

Insbesondere die nach dem erfindungsgemäßen Verfahren hergestellten Pasten und Folien eignen sich zur weiteren Veredelung. Hierbei ist eine besonders vorteilhafte Ausführungsform das Walzen zur Erhöhung der Packungsdichte der Harstoffe in der Dispersion. Das Walzen der Dispersionen kann z.B. direkt auf dem Gießtisch erfolgen, aber auch separat in Kalandriermaschinen.

Ein alternatives Verfahren stellt das Vakuumschlickerguss-Verfahren dar, dass insbesondere zur Herstellung dreidimensional geformter Verschleißschutzfolien geeignet ist. Beim Vakuumschlickerguss wird durch anlegen eines Unterdrucks der Prozessablauf wesentlich beschleunigt. Bei diesem Verfahren wird der Schlicker in eine poröse Form gegossen, durch die das vorhandene Lösungsmittel durch Unterdruck abgesaugt wird. Die im Schlicker enthaltenen Feststoffe lagern sich dabei auf der Formoberfläche ab und bilden so eine dreidimensional geformte Folie aus, die nach Trocknung aus der Form gelöst werden kann. Mit dem Vakuumverfahren können insbesondere sehr dünne Folien von bis zu 1 µm Dicke erhalten werden, das abgezogene Lösungsmittel kann zudem wiederverwendet werden. Das Vakuumverfahren ist ebenfalls großtechnisch nutzbar.

In einer bevorzugten Ausführungsform des Herstellungsverfahrens wird eine Suspension aus Lösemittel, wie z.B. einem Alkylketon, einem Binder, bevorzugt Polypropylencarbonat und einem Plastifizierer, bevorzugt Propylencarbonat in einer Kugelmühle mehrere Tage homogenisiert und gemischt. Die hergestellte Mischung der organischen Additive stellt die Grundlage für die Dispersion dar. Im nächsten Schritt wird eine Kugelmühle mit Mahlkörpern befüllt und die hergestellte Bindersuspension eingewogen. Die Menge der verwendeten Mahlkörper sollte auf die Feststoffmenge im Schlicker abgestimmt werden und die Mahlkörper sollten eine höhere Dichte als das verwendete Hartstoffmaterial aufweisen. Danach werden die Hartstoff- und gegebenenfalls Lotpulver eingewogen. Gegebenenfalls wird ein Lotmaterial eingesetzt. Als Lotmaterialien werden vorteilhaft Nickel/Chrom-Lotpulver, z. B. NICROBRAZ -Lotpulver (Wall Colmonoy) verwendet. Der erhaltene Schlicker wird unter ständigem Rühren zwischen 0,5 h und 24 h gemischt. Danach wird der gemischte Schlicker in ein spezielles Gießgefäß umgefüllt und entgast. Aufgrund der hohen Dichte der verwendeten Pulver muss der Schlicker ständig langsam gerührt werden, so dass eine Sedimentationen der Feststoffbestandteile vermieden wird. Danach wird der entgaste Schlicker je nach eingestellter Viskosität als Farbe oder Paste verarbeitet oder auf einer kommerziellen Gießanlage zu einer festen und flexiblen Folie vergossen. Als Auflage wird bevorzugt ein Kunststoffträger verwendet, insbesondere eine silikonbeschichtete Kunststofffolie beispielsweise aus PET, die den Zugkräften während des Gießprozesses widerstehen und eine geringe Haftung zu dem getrockneten Schlicker bzw. der Grünfolie aufweisen soll, so dass sie einfach wieder entfernt werden kann. Die erzeugte nasse Folie wird in einem Umlufttrocknungskanal, bevorzugt bei Temperaturen zwischen 25 °C und 85 °C getrocknet. Mit dem beschriebenen Verfahren können insbesondere grüne Folien mit einer Dichte zwischen 2,5 - 15 g/cm³ erzeugt werden. Der Anteil der festen organischen Additive in der Dispersion liegt bevorzugt zwischen 1 Gew.-% und 25 Gew.-%, insbesondere zwischen 2 Gew.-% und 10 Gew.-% bei einer Folie.

Die Herstellung von Verschleißschutzfolien mit Hilfe des Foliengießens hat vielerlei Vorteile. So können z.B. unter Verwendung eines organischen Binders große Mengen an Hartstoffpartikeln bei der Schlickerherstellung in eine Matrix aus Lotmaterial problemlos eingemischt werden. Durch Verwendung eines organischen Binders wird weiterhin die erhaltene Folie stabilisiert, insbesondere gegenüber einer mechanischer Beanspruchung, dadurch erhöhte sich die Handhabbarkeit der Folie, insbesondere erleichtert sich dadurch die Weiterverarbeitung der Folie.

Die hier beschriebenen Verschleißschutzfolien eignen sich insbesondere für die Erzeugung von Verschleißschutzschichten mittels Hartlötens bei über 450 °C, bevorzugt durch Hochtemperaturlöten bei über 900 °C, wobei die Erzeugung einer festen Verbindung der Folie mit dem Bauteil durch Flüssigphasensintern, wodurch sich eine Diffusionszone an der Grenzfläche ausbildet, erfolgt. Dabei entstehen besonders schlüssige Verbindungen zwischen der Verschleißschutzschicht und dem Bauteil. Das Flüssigphasensintern wird üblicher weise unter Schutzgas und/oder unter vermindertem Druck durchgeführt, wobei als Oxidationsschutz oft eine geringe Menge Wasserstoff zugemischt wird. Mit Hilfe des Hartlötens und des Hochtemperaturlötens lassen sich vor allem metallische Bauteile beschichten, die eine Oberfläche aus Stahl besitzen oder die eine Metalloberfläche haben, enthaltend z.B. Eisen, Kupfer, Molybdän, Chrom, Nickel, Aluminium, Silber oder Gold, wobei die Schmelztemperatur der Oberfläche bzw. deren Solidustemperatur oberhalb der Liquidustemperatur des in der Verschleißschutzfolie enthaltenen Lotmaterials liegen sollte.

Die binderhaltigen Verschleißschutzfolien können zur Herstellung einer Verschleißschutzschicht direkt auf ein Bauteil aufgebracht, entbindert und dann zu der entsprechenden Schutzschicht weiterverarbeitet werden. Bevorzugt werden die Verschleißschutzfolien bei der Anwendung auf Bauteiloberflächen bzw. Der Beschichtung eines Grundkörpers vorab entbindert und vorgesintert, um den Folienschwund bei der Herstellung der Verschleißschutzschicht auf dem Bauteil zu minimieren. Entbinderung bedeutet die möglichst rückstandsfreie Entfernung der zum Foliengießen benötigten organischen Bestandteile. Falls allerdings Rückstände in Form von Kohlenstoff zurückbleiben führt dies im folgenden Sinterprozess zur Bildung von Carbiden, was nicht unbedingt störend sein muss. Die Entbinderung erfolgt thermisch nach einem geeigneten Temperatur-/Zeitprofil. Der Temperaturanstieg sollte dabei nicht über 400 °C gehen. Üblicherweise erfolgt die Entbinderung unter Stickstoff oder Argon zum Teil mit einem geringen Wasserstoffanteil, um etwaig vorhandenen Sauerstoff aus der Atmosphäre zu entfernen. Die vollständige Entbinderung der Folie kann dabei bis zu einem Tag in Anspruch nehmen.

Die Dispersionen gemäß der Erfindung für Oberflächenbeschichtungen und insbesondere zur Herstellung von Verschleißschutzfolien auf Bauteilen, zur Herstellung von Bohrkronen und Verbundmaterialien.

### Beispiele

### Beispiel 1

### Herstellung und weitere Verwendung einer Dispersion.

In einem ersten Schritt wird die organische Grundmasse hergestellt, in der später die Hartstoffpartikel (macroline WSC) dispergiert werden. Dazu werden folgende Stoffe gemäß Tabelle 1 in einem Rührbehälter mit Mahlkugeln zusammengemischt und für 48 Stunden homogenisiert:

**Tabelle 1:**

| Verwendung | Stoff | Anteil in Gewichts % |
|---|---|---|
| Lösungsmittel | Methylethylketon (MEK) | 70 |
| Binder | Polypropylencarbonat | 25 |
| Plastifizierer | Propylencarbonat | 5 |

Im Anschluss erfolgt die Herstellung der Dispersion durch Hinzufügen der Hartstoffpartikel (macroline WSC). Dabei wird ein Verhältnis (in Gewichts %) von organischer Grundmasse zu Hartstoff von 8 : 92 eingestellt mit dem Ziel, eine möglichst hartstoffreiche Dispersion zu erzeugen. Die Mischung wird in einer langsam rotierenden Kugelmühle mit 28 UpM gemischt und anschließend bei einem Unterdruck von 480-520 mbar entgast. Die so erzeugte Dispersion ist gut geeignet zur weiteren Verarbeitung, z.B. als Folie.

Zur Herstellung einer Folie wird die Dispersion auf einem Siliconband vergossen. Die gewünschte Viskosität der Folie wird durch anschließende Verdampfung des Lösungsmittels in einem konventionellen Konvektionsofen unter reduziertem Druck eingestellt. Bei nahezu vollständiger Verdampfung erhält man eine flexible Folie mit einem organischen Bindergehalt von 2-3 Gew. %.

### Beispiel 2

Wie Beispiel 1, jedoch besteht die Hartstoffkomponente als Mischung aus macroline WSC und Lotmaterial in einem Gewichtsverhältnis von 65% (WSC) zu 35 % (Lotmaterial, bestehend aus 86 Gew. % Nickel, 10 Gew.% Chrom, 3 Gew. % Silizium und 1 Gew. % Bor).
Die Weiterverarbeitung der Dispersion zur Folie erfolgt analog Beispiel 1. Als Ergebnis erhält man eine Folie, die auch als Grünfolie oder grüne Folie bezeichnet wird.

### Beispiel 3

### Herstellungsverfahren für Verschleißsteile

Hierfür wird die Grünfolie gemäß Beispiel 2 verwendet. Die Grünfolie wird entsprechend der Größe des zu beschichtenden Bauteils zugeschnitten und auf der Bauteiloberfläche angebracht. Das Anbringen der Folie kann ohne weitere Hilfsmittel erfolgen, es können aber auch Klebstoffe verwendet werden, die sich bevorzugt durch thermische Zersetzung entfernen lassen. Insbesondere kann auch die Bindersuspension als Klebstoff für das Aufbringen der Folie auf das Bauteil verwendet werden. Danach wird das Bauteil mit der Grünfolie thermisch behandelt. Im ersten thermischen Behandlungsschritt wird der Entbinderungsprozess bevorzugt bei niedrigen Temperaturen von unter 350 °C, durchgeführt. Die Entbinderungstemperatur liegt in bevorzugten Ausführungsformen unterhalb der Liquidustemperatur des Lotmaterials in der Folie. Die eingesetzten organischen Additive werden dabei bevorzugt bei reduziertem Druck (unter einem bar) möglichst restlos entfernt. Im anschließenden Sinterschritt wird die entbinderte Folie im Hochvakuum bei ca. 10⁻⁴ - 10⁻⁶ mbar auf die Bauteiloberfläche aufgesintert. Die maximale Temperatur und die Haltezeit hängen vom verwendeten Lotmaterial ab, wobei zumindest die Liquidustemperatur des Lotmaterials erreicht werden muss. Die Liquidustemperatur des Lotmaterials sollte dabei unter der Schmelztemperatur des Hartstoffes liegen. Die Sintertemperaturen liegen normalerweise in einem Bereich von 800 ° C und 2000 °C, insbesondere zwischen 1000 °C und 1500 °C, bevorzugt zwischen 1050 °C und 1200 °C. Das eingesetzte Lotmaterial wird bei der vorgegebenen Sintertemperatur flüssig und benetzt die Hartstoffteilchen und die Bauteiloberfläche. Das angelegte Hochvakuum begünstigt die Benetzung der Hartstoffteilchen und des Trägers mit dem flüssigen Lot und reduziert die Porosität in der erzeugten Verschleißschutzschicht. Zwischen der Bauteiloberfläche und der hergestellten Verschleißschutzschicht bildet sich dabei eine ausgeprägte Diffusionsschicht. Die Diffusionsschicht bestimmt die Haftung der Verschleißschutzschicht auf der Bauteiloberfläche.

### Beispiel 4

In einem weiteren Verfahren wird ebenfalls die grüne Folie aus Beispiel 2 verwendet. In einem ersten Schritt wird eine vorgesinterte Folie hergestellt. Das Vorsintern der grünen Folie wird z.B. auf einer keramischen Sinterunterlage, wie Al₂O₃ oder ZrO₂ durchgeführt. Nach dem Entbinderungszyklus bis 400 °C wird ein Hochvakuum angelegt und die Hartstofffolie auf der Sinterunterlage zum festen Partikelverbundwerkstoff gesintert. Die so vorgesinterte Folie kann dann auf das Bauteil aufgebracht und durch Flüssigphasensintem analog Beispiel 3 zur Verschleißschutzschicht verarbeitet werden. Alternativ kann das vorgesinterte Material auch auf die Oberfläche des Bauteils geklebt bzw. unter Verwendung eines Zusatzlotes aufgelötet werden.

### Beispiel 5

Die Folie aus Beispiel 1 wird in eine Graphitform eingelegt, mit Hartstoffpulver z.B. Wolframschmelzcarbid (WSC) umschüttet. Auf die Oberfläche der Schüttung wird ein stückiges Lotmaterial auf Kupferbasis aufgelegt, wobei das Gewichtsverhältnis von Lotmaterial zu der übrigen Masse (Folie + Hartstoffpulver) 1:1 beträgt. Anschließend wird die gefüllte Graphitform in einem Ofen bei einer Temperatur von ca. 1000 bis 1200 °C infiltriert. Dazu ist im Allgemeinen kein Vakuumofen erforderlich, da sich in der Graphitform eine natürliche CO/CO₂ Schutzgasatmosphäre einstellt.

### Beispiel 6

Die Dispersion aus Beispiel 1 wird in einen offenen Behälter eingebracht. Danach wird ein Grundkörper z.B. aus Baustahl in die Dispersion eingetaucht. Der so beschichtete Grundkörper wird danach aus der Dispersion entfernt, bei Temperaturen von 80°C in einem Trockenschrank getrocknet und anschließend mit einer Schicht aus Lotmaterial gemäß Beispiel 2 überstrichen und bei einer Temperatur von ca. 1100°C infiltriert.

### Beispiel 7

Die Dispersion gemäß Beispiel 2 wird durch teilweise Verdampfung des Lösungsmittels (MEK) bei einer Temperatur von 60°C in eine viskose Paste überführt. Diese Paste wird dann mit einem Spatel auf die beschädigte, z.B. rissige Oberfläche eines Bauteils, z.B. Drillbits aufgetragen. In einem weiteren Schritt wird die Paste mit einem konventionellen Lötbrenner eingelötet.
Das auf diese Weise behandelte Bauteil zeigte eine rissfreie Oberfläche.
Die in den Beispielen 3 bis 6 erzeugten Verschleißschutzschichten zeichnen sich durch eine geringe Porosität von kleiner 5%, bevorzugt von kleiner 1,5 %, insbesondere bevorzugt von kleiner 1 % aus. Die Porosität wird an einem Verschleißschutzschicht-Querschliff nach ISO 4505 optisch bestimmt.
Die Verschleißschutzschichten, weisen weiterhin eine Dichte von 2,5 g/cm³ bis 25 g/cm³, bevorzugt von 5 g/cm³ bis 15 g/cm³, auf. Die erzeugten Verschleißschutzschichten zeichnen sich durch eine hohe Härte aus. Es können ohne Probleme Verschleißschutzschichten mit einer Rockwellhärte zwischen 40 HRC und 70 HRC erzeugt werden. Bevorzugte Verschleißschutzschichten weisen eine Rockwellhärte von mindestens 50 HRC auf.

## Patentansprüche

1. Dispersionen, wobei die Dispersionen Hartstoffpartikel und mindestens einen organischen Binder und/oder mindestens einen Plastifizierer enthalten, wobei die Hartstoffpartikel einen inneren Kern aus Wolframschmelzcarbid und/oder einer Legierung bestehend aus Wolframschmelzcarbid und mindestens einem weiteren Carbid der Elemente ausgewählt aus der Gruppe 4A, 5A und 6A des Periodensystems der Elemente und eine äußere Hülle aus einer Legierung bestehend aus Wolframcarbid und mindestens einem weiteren Carbid der Elemente ausgewählt aus der Gruppe 4A, 5A und 6A des Periodensystems der Elemente aufweisen, wobei die Dispersionen
- 5 Gew.-% bis 95 Gew.-% Hartstoffpartikel, und
- 0 Gew.-% bis 95 Gew.-% Lotmaterialpartikel und
- 2 Gew.-% bis 25 Gew.-% organischen Binder und/oder Plastifizierer bezogen auf dessen Gesamtgewicht enthalten, wobei der Gesamtgehalt an weiteren Karbiden ≤ 10 Gew.% beträgt.

2. Dispersionen nach Anspruch 1, **dadurch gekennzeichnet, dass** sie Lotmaterialpartikel, ausgewählt aus der Gruppe der Hartlote oder Hochtemperaturlote, enthalten.

3. Dispersionen nach Anspruch 1 oder 2, **dadurch gekennzeichnet, dass** der organische Binder und/oder Plastifizierer eine Zersetzungstemperatur von unter 400°C aufweist.

4. Dispersionen nach einem der Ansprüche 1 bis 3, **dadurch gekennzeichnet, dass** der organische Binder ein Polypropylencarbonat und/oder der Plastifizierer ein Propylencarbonat ist.

5. Dispersionen nach einem der Ansprüche 1 bis 4, **dadurch gekennzeichnet, dass** der Kern der Hartstoffpartikel ein eutektisches Gemisch aus Monowolframcarbid (WC) und Diwolframcarbid (W₂C) enthält.

6. Dispersionen nach einem der Ansprüche 1 bis 5, **dadurch gekennzeichnet, dass** die Hartstoffpartikel eine Partikelgrösse bestimmt mittels RoTap-Siebanalyse gemäss ASTM B 214 von bis zu 3000 µm aufweisen.

7. Dispersionen nach einem der Ansprüche 1 bis 6, **dadurch gekennzeichnet, dass** die Hartstoffpartikel sphärische Form aufweisen.

8. Dispersionen nach einem der Ansprüche 1 bis 7, **dadurch gekennzeichnet, dass** die Dispersionen Diamanten enthalten.

9. Dispersionen nach einem der Ansprüche 1 bis 8, **dadurch gekennzeichnet, dass** die Lotmaterialpartikel aus der Gruppe der Nickel-, Kobalt-, Kupfer-, Zinn- und Silber- Lotmaterialien ausgewählt sind.

10. Dispersionen nach einem der Ansprüche 1 bis 9, **dadurch gekennzeichnet, dass** die Lotmaterialpartikel ein Nickel/Chrom-Lotmaterial oder ein Nickel/Kobalt-Lotmaterial enthalten.

11. Verschleißschutzfolie, enthaltend Dispersionen nach mindestens einem der Ansprüche 1 bis 10.

12. Verbundmaterialien, enthaltend mindestens eine Verschleißschutzfolie gemäß Anspruch 11, wobei die einzelnen Schichten des Verbundes unterschiedliche Anteile an Hartstoffpartikeln und/oder Lotmaterialpartikeln enthalten.

13. Verfahren zur Herstellung von Dispersionen nach einem der Ansprüche 1 bis 10, **dadurch gekennzeichnet, dass**
a) eine Bindersuspension enthaltend ein Lösemittel und einen organischen Binder hergestellt wird,
b) die in Schritt a) hergestellte Bindersuspension mit Hartstoffpartikeln und gegebenenfalls Lotmaterialpartikeln ausgewählt aus der Gruppe der Hartlote oder Hochtemperaturlote versetzt und zu einem Schlicker verarbeitet werden und
c) der erhaltene Schlicker zu einer Paste verarbeitet oder zu einer Folie gegossen wird.

14. Verfahren nach Anspruch 13, **dadurch gekennzeichnet, dass** zur Herstellung des Schlickers bezogen auf dessen Gesamtgewicht
- 5 Gew.-% bis 30 Gew.-% der Bindersuspension, wobei die Bindersuspension 1 Gew.-% bis 60 Gew.-% an organischem Binder bezogen auf das Gesamtgewicht der Bindersuspension und 0 Gew.-% bis 15 Gew.-% an Plastifizierer bezogen auf das Gesamtgewicht der Bindersuspension enthält und
- 70 Gew.-% bis 95 Gew.-% an Hartstoffpartikeln und Lotmaterialpartikeln eingesetzt werden, wobei das Gewichtsverhältnis zwischen Hartstoffpartikeln und Lotmaterialpartikeln zwischen 40 : 60 und 90 : 10 liegt, eingesetzt werden.

15. Verfahren nach Anspruch 13 oder 14, **dadurch gekennzeichnet, dass** die aus einer Dispersion erhaltene Masse, gegebenenfalls eine Verschleißschutzfolie, bei unter 400°C entbindert und gegebenenfalls im Anschluss vorgesintert wird.

16. Verwendung von Dispersionen nach einem der Ansprüche 1 bis 10 oder von Verschleißschutzfolien nach Anspruch 11 oder Verbundmaterialien nach Anspruch 12 oder der daraus hergestellten vorgesinterten Verschleißschutzfolien zur Herstellung von Verschleißschutzschichten auf Bauteilen oder zur Herstellung von Bohrkronen.

17. Verwendung von Dispersionen nach einem der Ansprüche 1 bis 10, **dadurch gekennzeichnet, dass** die binderhaltige Masse, gegebenenfalls Folie direkt auf das Bauteil aufgebracht und dann bei Temperaturen unter 400 °C entbindert wird oder vor Aufbringung auf das Bauteil bei Temperaturen von unter 400 °C entbindert und danach vorgesintert wird und im Anschluss daran durch Flüssigphasenlöten die Verschleißschutzschicht auf dem Bauteil erzeugt wird.

18. Verfahren zur Herstellung von verschleißgeschützten Bauteilen, **dadurch gekennzeichnet, dass** eine aus der Dispersion gemäß den Ansprüchen 1 bis 10 hergestellten und vorgesinterte Folie oder aus Verbundmaterialien nach Anspruch 12 vorgesinterte Folie auf das Bauteil aufgelötet, aufgeklebt oder aufgeschweißt werden.

## Claims

1. Dispersions, wherein the dispersions contain hard material particles and at least one organic binder and/or at least one plasticizer, where the hard material particles have an inner core composed of fused tungsten carbide and/or an alloy consisting of fused tungsten carbide and at least one further carbide of elements selected from groups 4A, 5A and 6A of the Periodic Table of the Elements and an outer shell composed of an alloy consisting of tungsten carbide and at least one further carbide of elements selected from groups 4A, 5A and 6A of the Periodic Table of the Elements, where the dispersions contain
- from 5% by weight to 95% by weight of hard material particles and
- from 0% by weight to 95% by weight of solder material particles and
- from 2% by weight to 25% by weight of organic binders and/or plasticizers,
based on their total weight, where the total content of further carbides is ≤ 10% by weight.

2. Dispersions according to Claim 1, **characterized in that** they contain solder material particles selected from the group consisting of hard solders and high-temperature solders.

3. Dispersions according to Claim 1 or 2, **characterized in that** the organic binder and/or plasticizer has a decomposition temperature below 400°C.

4. Dispersions according to any of Claims 1 to 3, **characterized in that** the organic binder is a polypropylene carbonate and/or the plasticizer is a propylene carbonate.

5. Dispersions according to any of Claims 1 to 4, **characterized in that** the core of the hard material particles contains a eutectic mixture of monotungsten carbide (WC) and ditungsten carbide (W₂C).

6. Dispersions according to any of Claims 1 to 5, **characterized in that** the hard material particles have a particle size determined by means of RoTap sieve analysis in accordance with ASTM B 214 of up to 3000 µm.

7. Dispersions according to any of Claims 1 to 6, **characterized in that** the hard material particles have a spherical shape.

8. Dispersions according to any of Claims 1 to 7, **characterized in that** the dispersions contain diamonds.

9. Dispersions according to any of Claims 1 to 8, **characterized in that** the solder material particles are selected from the group consisting of nickel, cobalt, copper, tin and silver solder materials.

10. Dispersions according to any of Claims 1 to 9, **characterized in that** the solder material particles contain a nickel/chromium solder material or a nickel/cobalt solder material.

11. Wear protection sheet containing dispersions according to at least one of Claims 1 to 10.

12. Composites containing at least one wear protection sheet according to Claim 11, wherein the individual layers of the composite contain different proportions of hard material particles and/or solder material particles.

13. Process for producing dispersions according to any of Claims 1 to 10, **characterized in that**
a) a binder suspension containing a solvent and an organic binder is produced,
b) the binder suspension produced in step a) is admixed with hard material particles and optionally solder material particles selected from the group consisting of hard solders or high-temperature solders and processed to give a slip and
c) the slip obtained is processed to give a paste or cast to give a sheet.

14. Process according to Claim 13, **characterized in that** the slip is produced using, based on its total weight,
- from 5% by weight to 30% by weight of the binder suspension, where the binder suspension contains from 1% by weight to 60% by weight of organic binder based on the total weight of the binder suspension and from 0% by weight to 15% by weight of plasticizer based on the total weight of the binder suspension, and
- from 70% by weight to 95% by weight of hard material particles and solder material particles, where the weight ratio of hard material particles to solder material particles is in the range from 40:60 to 90:10.

15. Process according to Claim 13 or 14, **characterized in that** the composition obtained from a dispersion, optionally a wear protection sheet, is subjected to binder removal at below 400°C and is optionally subsequently presintered.

16. Use of dispersions according to any of Claims 1 to 10 or of wear protection sheets according to Claim 11 or composites according to Claim 12 or presintered wear protection sheets produced therefrom for producing wear protection layers on components or for producing drill bits.

17. Use of dispersions according to any of Claims 1 to 10, **characterized in that** the binder-containing composition, optionally sheet, is applied directly to the component and then subjected to binder removal at temperatures below 400°C or is subjected to binder removal at temperatures below 400°C and then presintered before application to the component and the wear protection layer is subsequently produced on the component by liquid-phase soldering.

18. Process for producing wear-resistant components, **characterized in that** a presintered sheet produced from the dispersion according to any of Claims 1 to 10 or presintered sheet composed of composites according to Claim 12 is soldered, adhesively bonded or welded onto the component.

## Revendications

1. Dispersions, dans lesquelles les dispersions comprennent des particules dures et au moins un liant organique et/ou au moins un plastifiant, les particules dures contenant un noyau intérieur en carbure de tungstène fondu et/ou en un alliage constitué de carbure de tungstène fondu et d'au moins un autre carbure des éléments choisis dans les groupes 4A, 5A et 6A du tableau périodique des éléments, et une enveloppe extérieure en un alliage constitué de carbure de tungstène et d'au moins un autre carbure des éléments choisis dans les groupes 4A, 5A et 6A du tableau périodique des éléments, les dispersions contenant
- 5 % en poids à 95 % en poids de particules dures et
- 0 % en poids à 95 % en poids de particules de matériau d'apport de brasage et
- 2 % en poids à 25 % en poids de liants organiques et/ou de plastifiants,
par rapport à leur poids total, la teneur totale en autres carbures étant ≤ 10 % en poids.

2. Dispersions selon la revendication 1, **caractérisées en ce qu'**elles contiennent des particules de matériau d'apport de brasage choisies dans le groupe des métaux d'apport de brasage forts ou des métaux d'apport de brasage haute température.

3. Dispersions selon la revendication 1 ou 2, **caractérisées en ce que** le liant organique et/ou le plastifiant présentent une température de décomposition inférieure à 400 °C.

4. Dispersions selon l'une quelconque des revendications 1 à 3, **caractérisées en ce que** le liant organique est un polycarbonate de propylène et/ou le plastifiant est un carbonate de propylène.

5. Dispersions selon l'une quelconque des revendications 1 à 4, **caractérisées en ce que** le noyau des particules dures contient un mélange eutectique de carbure de monotungstène (WC) et de carbure de ditungstène (W₂C).

6. Dispersions selon l'une quelconque des revendications 1 à 5, **caractérisées en ce que** les particules dures présentent une taille de particule déterminée par analyse granulométrique RoTap selon ASTM B 214 de jusqu'à 3 000 µm.

7. Dispersions selon l'une quelconque des revendications 1 à 6, **caractérisées en ce que** les particules dures présentent une forme sphérique.

8. Dispersions selon l'une quelconque des revendications 1 à 7, **caractérisées en ce que** les dispersions contiennent des diamants.

9. Dispersions selon l'une quelconque des revendications 1 à 8, **caractérisées en ce que** les particules de matériau d'apport de brasage sont choisies dans le groupe des matériaux d'apport de brasage à base de nickel, de cobalt, de cuivre, d'étain et d'argent.

10. Dispersions selon l'une quelconque des revendications 1 à 9, **caractérisées en ce que** les particules de matériau d'apport de brasage contiennent un matériau d'apport de brasage nickel/chrome ou un matériau d'apport de brasage nickel/cobalt.

11. Feuille protectrice contre l'usure, contenant des dispersions selon au moins l'une quelconque des revendications 1 à 10.

12. Matériaux composites, contenant au moins une feuille protectrice contre l'usure selon la revendication 11, les couches individuelles du composite contenant différentes proportions de particules dures et/ou de particules de matériau d'apport de brasage.

13. Procédé de fabrication de dispersions selon l'une quelconque des revendications 1 à 10, **caractérisé en ce que**
a) une suspension de liant contenant un solvant et un liant organique est fabriquée,
b) la suspension de liant fabriquée à l'étape a) est mélangée avec des particules dures et éventuellement des particules de matériau de brasage choisies dans le groupe des métaux d'apport de brasage forts ou des métaux d'apport de brasage haute température, et transformée en une barbotine, et
c) la barbotine obtenue est transformée en une pâte ou moulée en une feuille.

14. Procédé selon la revendication 13, **caractérisé en ce que**, pour la fabrication de la barbotine, par rapport à son poids total,
- 5 % en poids à 30 % en poids de la suspension de liant, la suspension de liant contenant 1 % en poids à 60 % en poids de liant organique par rapport au poids total de la suspension de liant et 0 % en poids à 15 % en poids de plastifiant par rapport au poids total de la suspension de liant, et
- 70 % en poids à 95 % en poids de particules dures et de particules de matériau d'apport de brasage, sont utilisés, le rapport en poids entre les particules dures et les particules de matériau d'apport de brasage étant compris entre 40:60 et 90:10.

15. Procédé selon la revendication 13 ou 14, **caractérisé en ce que** la masse obtenue à partir d'une dispersion, éventuellement une feuille protectrice contre l'usure, est déliée à moins de 400 °C, puis éventuellement pré-frittée.

16. Utilisation de dispersions selon l'une quelconque des revendications 1 à 10 ou de feuilles protectrices contre l'usure selon la revendication 11 ou de matériaux composites selon la revendication 12 ou des feuilles protectrices contre l'usure pré-frittées fabriquées à partir de ceux-ci, pour la fabrication de couches protectrices contre l'usure sur des composants ou pour la fabrication de couronnes de carottier.

17. Utilisation de dispersions selon l'une quelconque des revendications 1 à 10, **caractérisée en ce que** la masse contenant un liant, éventuellement la feuille, est appliquée directement sur le composant, puis déliée à des températures de moins de 400 °C, ou déliée à des températures de moins de 400 °C avant l'application sur le composant, puis pré-frittée, puis la couche protectrice contre l'usure est formée sur le composant par brasage en phase liquide.

18. Procédé de fabrication de composants protégés contre l'usure, **caractérisé en ce qu'**une feuille fabriquée à partir de la dispersion selon les revendications 1 à 10 et pré-frittée ou une feuille pré-frittée à partir de matériaux composites selon la revendication 12 est appliquée par brasage, collée ou soudée sur le composant.
